(19) Europäisches Patentamt
European Patent Office
Office européen des brevets

(11) **EP 4 450 214 A1**

(12) **EUROPEAN PATENT APPLICATION**

(43) Date of publication:
**23.10.2024 Bulletin 2024/43**

(21) Application number: **24171389.0**

(22) Date of filing: **19.04.2024**

(51) International Patent Classification (IPC):
**B23P 6/04** *(2006.01)* **H05B 3/00** *(2006.01)*

(52) Cooperative Patent Classification (CPC):
**B23P 6/04; H05B 3/0004**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023 SK 500242023**

(71) Applicants:
• **Ústav Stavebníctva a Architektúry Slovenskej Akadémie Vied, Verejná Výskumná Inštitúcia 845 03 Bratislava (SK)**

• **Technická Univerzita V Kosiciach 04200 Kosice-Sever (SK)**

(72) Inventors:
• **Sládek, Ján 841 06 Bratislava (SK)**
• **Monková, Katarína 080 01 Presov (SK)**
• **Monka, Peter Pavol 080 01 Presov (SK)**

(74) Representative: **Porubcan, Róbert Puskinova 19 900 28 Ivanka pri Dunaji (SK)**

(54) **METHOD OF TREATING A CRACK IN THE CONDUCTIVE LAYER OF AN ELECTRICAL AND/OR ELECTRONIC ELEMENT AND DEVICE FOR ITS REALIZATION**

(57)     By heating the conductive layer (1) by Joule heat generated in the vicinity of the crack (2) a pressure stress leading to at least partial closing of the crack (2) is produced, without the melting of the conductive layer (1). Joule heat in the vicinity of the crack (2) is produced non-homogeneously, which causes a non-homogeneous heat field in the vicinity of the crack (2) and by the root of the crack (21) and thereby generates pressure stresses leading to the closing of the crack (2). The density of the electric current in the conductive layer (1) is between $5.10^3$ to $40.10^4$ A.m$^{-2}$, preferably between $1.10^4$ to $25.10^4$ A.m$^{-2}$. The density of the electric current in the conductive layer (1) by the crack's (2) root (21) is between $1.10^{11}$ A.m$^{-2}$ to $1.10^{13}$ A.m$^{-2}$, preferably more than $1.10^{12}$ A.m$^{-2}$. The electric voltage in the conductive layer (1) is 4 to 220 V, preferably 6 to 180 V. The process of treatment runs regularly in the set interval or based on diagnostics of the presence of the crack (2) in the conductive layer (1). Electric current can be generated by the source (3) which is a permanent part of the device or the system with the element (4) so that the autonomously run treatment phase is ensured. The method and the device can be preferably used in transport technology, for example, cars, electric cars, aviation and cosmonautics.

Fig. 13

EP 4 450 214 A1

## Description

### Field of technology

The invention concerns the treatment of the crack (crack arrest) in the conductive layer, mainly in order to at least partially stop the spread and/or growth of the crack, in the microstructure and/or nanostructure of an electric conductive electronic element. The invention also gives a description of the device for the realization of this method mainly in fields of electrical engineering (electrotechnics) and microelectrical engineering (microelectrotechnics) which allows to increase the durability and reliability of the devices with the components where there is a risk of cracks arising.

### Prior state of the art

The creation and spread of cracks in the construction materials during the transfer of the mechanical load is already known in detail and the cracks are treated in various ways. In general, the goal is to produce pressure stresses (compressive stresses) in the vicinity of the peak of the crack so that the spread of the crack stops.

Publication CN105429203 discloses the use of electric discharge to stop the crack, where the pulse current runs through a metal plate with the crack and at the peak of the crack, the Joule heat is sufficient to melt the material at the root of the crack. The creation of an opening at the root of the crack leads to a decrease of the concentration of stresses in a similar way in which the cracks are treated in mechanically stressed parts. In the case of layers used in electric or electronic components the melting of the material is not possible, since it would lead to damage of the surrounding elements. In the case of small components, the methods and principles known and used in macromechanics do not hold correspondingly, and the transfer of these methods to the levels of microstructures or nanostructures does not lead to satisfying results.

Publication pursuant to CN110125611 discloses the use of Joule heat for the creation of electroplastic effect by the crack, whereby at the same time the material is treated by the ultrasound whose mechanical energy leads to the closing of the crack. An independent device must be used to generate ultrasound waves, which complicates the practical use of this method.

Electric and electronic circuits in many of these fields, such as transport technologies, mainly aviation and cosmonautics, have significant effects on the safety and functioning of the systems. With the increase in electromobility, one can expect the demand to increase the reliability and durability of the electric and electronic components in the charging elements and systems. The current approach to increase the reliability of the electric and electronic elements lies in over-dimensioning of the element or in its backup, where the circuit with the backup element is used when the basic connection fails. This, however, leads to an increase in costs and weight. In case of failure of the electric or electronic element, the repair is addressed by replacement of the respective component, or by replacement of the whole PCB board, which, however, requires an interruption of the operation and also physical intervention of the servicing personnel.

Publications CN105429203A, and CN1 1 1763816A disclose the use of the Joule heat when treating the crack, but this leads to melting of the material which in the case of electrotechnical components leads to damage or destruction of the component. The article "Analysis of Joule Heating Behavior and Residual Compressive Stress around Crack Tip under High Electric Load" by Thomas Jin-Chee Liu, Hindawi in "Modelling and Simulation in Engineering", Volume 2017, Article ID 3012949, discloses the treatment of the cracks using Joule heat, but it uses the typical theory of elasticity. The processes in micro/nano-dimensional zones are not sufficiently covered by classical continuum theory. When deformation gradients in the classical theory are ignored, this leads to incorrect descriptions of stresses.

A method of effective treatment of the conductive layers with the initiated crack in the microstructure and/or nanostructure of the electric and/or electronic element is thus desired and not known. The device for realization of the new method should be simple and it should be able to use it generally in various applications.

### Essence of the invention

The abovementioned deficiencies are significantly remedied by the method of stopping the crack in the conductive layer of the microstructure and/or nanostructure of the electric and/or electronic element which includes the adjustment of the electric current in the conductive layer, where Joule heat is produced in the vicinity of the crack by controlled transfer of the electric current, whose essence lies in the fact that the heating of the conductive layer in the vicinity of the crack produces pressure stress leading to closing of the crack, all without melting of the conductive layer, that is, without reaching the temperature of the melting of the material of the respective conductive layer.

The term "stopping the crack" or crack arrest denotes a treatment of the crack and acting upon the crack which at least partially, at least for some time, prevents the spread of the crack, the growth of the crack, in the respective layer in the material, whereby the result does not need to be a total closure or healing of the crack.

An important feature of the invention is that the mechanical closure of the crack is achieved by non-mechanical means, that is, by the action of the Joule heat in such a way that a non-homogeneous heat field arises in the vicinity of the crack, due to which non-homogeneous stress field arises in the conductive layer and the resulting pressure stress in the vicinity of the crack acts towards closure of the crack.

An advantage of this approach is the speed in which the effects are achieved; only 5-second treatment suffices, preferably the period is on the order of up to 1 second. In the conductive layer from titan alloy Ti-6Al-4V with a width 1000 nm and a central layer of length of 200 nm, an action of an electric current within $1.10^{-10}$ seconds sufficed. The opening of the crack subsequently decreased by about 40% and it was closed for about 20% of its length by the root, and the spread of the crack was stopped.

For the general description of the laws governing the induction of the Joule heat in the volume of the conductive material, it is possible to start with the local composition of the electric current in the direction perpendicular to the direction of the flow of the electric current. The density of the electric current J is defined as a product of the multiplication of the density of the electric current r and the speed of its carrier v in a given place:

$$J = rv$$

Local density of the thermal performance (Joule heat) released during the transition of the electric current through the given environment can be described as a scalar product of the multiplication of intensity of the electric field E and density of the electric current J:

$$\frac{dP}{dV} = J.E$$

where: P - performance, V - volume.

It follows from the abovementioned relationship that the induced heat is directly proportional to the density of the electric current. That is why the density of the electric current is one of the most suitable and most important definitions to set the parameters of the method according to this invention. For the common conductive materials with good electric conductivity and usually constant cross-section alongside their whole length, there is a current density at the level below $1.10^4$ A.m$^{-2}$ maintained in common operating conditions, so that there is no excessive heating of these conductors. In the method under this invention, the typical current densities will surpass $1.10^4$ A.m$^{-2}$.

Materials used in electrotechnics and microelectrotechnics are specific kinds of materials characterized by the features which differentiate them from common construction materials designed for the transfer of a mechanical load. The materials of the conductive layers in electrotechnics and microelectrotechnics have different features precisely in the field of electric conductance with the possibility of significant influence over it, with the possibility of changing the electromagnetic features in leaps, with differences in the thermo-mechanical behavior, and so on. Another significant difference in the modern electrotechnical and microelectronic elements and systems is the use of microstructured and nanostructured materials whose physical features can differ significantly from the materials with typically produced macrostructures. It is therefore not possible to directly apply general basic physical relationships between the density of the electric current and induced current which are valid in macrostructures to the problem in the vicinity of the root of the initiated crack for the microstructured and/or nanostructured electronic materials used in the field of microelectronics.

When proceeding according to this invention it is preferable if the density of the electric current in the treated conductive layer of the electric or electronic element ranges from $5.10^3$ to $40.10^4$ A.m$^{-2}$, preferably from $1.10^4$ to $25.10^4$ A.m$^{-2}$. The cracks at the root can be significantly larger, for example on orders from $1.10^{11}$ A.m$^{-2}$ to $1.10^{13}$ A.m$^{-2}$, and theoretically, in the discrete point of the root, the density of the electric current can be infinitely large. In practice, the density of the electric current in the crack can surpass values on orders of $1.10^{12}$ A.m$^{-2}$.

The electric voltage in the treated conductive layer is preferably 4 to 220 V, especially preferably 6 to 180 V.

These values of parameters result from practically available relationships to determine the current density in the vicinity of the initiated crack based on methodology describing the influence of the electric current on the induced temperature generated by the electric conductor based on Joule-Lenz law. The stress gradients in the material when considering the associated basic and natural limit conditions are set based on laws of conduction of heat using values of thermal conductivity, density of the material and specific heat. The methodology of calculating the parameters to produce the defined amount of Joule heat to stop the growth of the initiated crack includes the following solution under the fact that the features of the electric field are not tied to features of the mechanical and heat fields:

- calculation of electric potential by Laplace equation:

$$\Delta\phi = 0$$

- calculation of Joule heat and solution of the non-stationary problem of the conduction of heat by the equation:

$$\lambda_{i,i}(x,\tau) + \rho c\dot{\theta}(x,\tau) = Q$$

- calculation of mechanical fields from the heat fields by the equation:

$$\sigma_{ij,j}(x,\tau) - \mu_{ijk,jk}(x,\tau) = 0$$

- calculation of total deformation without relocation $u_i$ by the equation:

$$\varepsilon_{ij} = \frac{1}{2}\left(u_{i,j} + u_{j,i}\right)$$

- definition of the stress-heat module:

$$\gamma_{ij} = c_{ijkl}\beta_{kl}$$

The proposed method allows for simple, quick and sophisticated achieving of stopping the growth of cracks in electrically conductive microstructured and nanostructured electrotechnical materials used in the field of microelectronics.

The method of stopping the crack according to this invention increases the durability of the constructions with initiated crack and it can be used mainly in electronic elements and devices where initialization of mainly fatigue crack, whose further spread can be prevented by simple creation of a relaxation environment using Joule heat induced in the vicinity of the crack's root.

The identification of the initialization of the crack can be realized passively by means of preventive control action by the external device in the set intervals (hereinafter as "passive identification" / "off-board") or in an active way by identification subsystem integrated in the controlled system (hereinafter "active identification" / "on-board").

Relaxation of the stresses in the root of the crack by inducing Joule heat can be ensured through external device (hereinafter "external system of crack relaxation") or through subsystem directly integrated into the electrotechnical system (hereinafter "integrated system of crack relaxation").

Typical examples of the industrial use of the disclosed method for mass-produced products are charging, accumulation and traction systems in electric cars. The eventual short circuit in these systems caused by the propagation of the initiated crack can cause fire, which is extremely dangerous in cases of lithium-based accumulators. From the point of view of propagation of a crack and the risk of short circuits, the critical elements in electric cars are mainly voltage converters of traction and elements of management of charging / using of accumulators' energy. Both types of identification of the propagation of the crack can be used for electric cars - passive (for cheaper versions) and active (for costlier versions) - as well as both crack relaxation systems.

A typical example of industrial use for individually manufactured products is special aviation techniques or spaceships. When operating these devices, a high degree of reliability is needed and usually it is not possible to protect the damaged piece and replace it in operation. At the same type, the backing up of the systems is in conflict with requests for low weight. Peculiar conditions of these products are also due to the artificial atmosphere of the orbital stations and spaceships, whereby this atmosphere is, compared to terrestrial conditions, richer in oxygen and therefore there is a significantly higher risk of spread of fire caused by short circuiting electrotechnical components. Similarly grave fact is that due to the conditions of microgravity on the Earth's orbit and in interplanetary space, the characteristics of fire differ significantly compared to fire in a gravitational field, whereby mainly toxic fire components (carbon monoxide - CO; formaldehyde - $CH_2O$) present a grave risk to health and life of the crew, and thereby also the success of a financially demanding mission. In such products, it is recommended to use active identification of identification of a crack and integrated crack relaxation system to relax the stresses at the root of the crack.

Deficiencies in the prior art are significantly remedied also by the device for stopping the crack in the conductive layer of the microstructure and/or nanostructure of the electric and/or electrotechnical element, which includes a source of electric current to produce Joule heat in the conductive layer, according to this invention, whose essence lies in the fact that the source of the electric current is designed for connection or is connected to the conductive layer of the electric and/or electronic element to heat the conductive layer in the vicinity of the crack. The function of the source is to produce pressure stress leading to the closing of the crack, and this all without the melting of the conductive layer as disclosed in the description of the method.

Compared to publications in the prior art, which use the classical theory of elasticity, where there are infinite Cauchy stresses at the root of the crack, the proposed invention uses gradient theory with finite values of stresses. The growth of the cracks is a process of coalescence of microcracks in the vicinity of the crack's root. It is experimentally confirmed that the processes in the micro/nanodimensional zones are not sufficiently described by the classical continuum theory. Ignoring the gradients of the deformations in the classical theory leads to incorrect descriptions of stresses. Due to the concentration of the stresses in the vicinity of the root of the crack, there are significant gradients of deformations, where the classical model can be easily doubted. The invention is preferably used with micro and nanodimensional components. The gradient theories under the invention are to be used for microelectronic components where the dimensions are comparable with the structure of the material with microstructural material parameters, whereas classical theories do not include microstructural phenomena and they are therefore unsuitable.

The source of the electric current to produce Joule heat is part of the device with electric and/or electronic element or it is part of the independent maintenance device. In case the source of the electric element is part of the device (on-board), it is also preferable if the device includes a diagnostic module, too, to determine the presence of the crack in the conductive layers of one or multiple elements. In another arrangement without a diagnostic phase the treatment by the method according to this invention can take place preventively, for example during each scheduled reset, and so on.

A significant advantage of the proposed invention is the increase in durability and lifetime of the electric or electronic element without the need to pull it out of PCB, whereby the method and the device according to this invention can be used as an autonomous process without the need for physical intervention of the personnel.


## Description of drawings

The invention is further disclosed by means of drawings 1 to 15. The size and shape of the depicted cracks, their ratio to the dimensions of the conductive layer, are for illustration purposes only and cannot be interpreted as limiting the scope of protection.

The crack treated by the method according to this invention can be open, reaching all the way to the edge of the material of the conductive layer, even if on the drawings the crack is depicted as closed and limited by two roots.


Fig. 1: Global Cartesian coordinates, curvilinear coordinates, for the 4-node quadrilateral finite element.

Fig. 2: Geometry and boundary conditions of the plate with a central crack.

Fig. 3: Contour plot of the temperature (K) in time instant $\tau = 1 \times 10^{-10}$ $s$.

Fig. 4: Comparison of the temperature profiles obtained by ANSYS and Mixed FEM ($x_3 = 0$).

Fig. 5: Comparison of the distribution of the potential obtained by ANSYS and Mixed FEM for ($x_3 = 2.5a$).

Fig. 6: The contour plot of the electric current (A/m$^2$) at the crack tip vicinity.

Fig. 7: Comparison of the crack opening displacements obtained within classic theory $l$=0 at various time instants.

Fig. 8: Crack opening displacements at various time instants for micro-stiffness length parameter $l$ = 10$^{-8}$ m.

Fig. 9 Crack opening displacements for various values of the micro-stiffness length parameter at time instant $\tau = 0$ $s$ (pure mechanical load).

Fig. 10: Crack opening displacements for various values of the micro-stiffness length parameters (at time instant $\tau$ = 1$\times$10$^{-10}$ $s$).

Fig. 11: Time variation of the crack opening displacement at ($x_1$=0, $x_3$=0) for various values of the micro-stiffness length parameters.

Figure 12 depicts a typical distribution of the field of the density of the electric current (fig. 12a) and heat field (fig. 12b) in the vicinity of the crack's root. A direct dependency of the density of the electric current and temperature by the crack's root can be seen in figure 12.

Figure 13 depicts the stopping of the further growth of the crack by Joule heat induced in the area of the crack's root in the microtechnical element employing the transfer of the electric current.

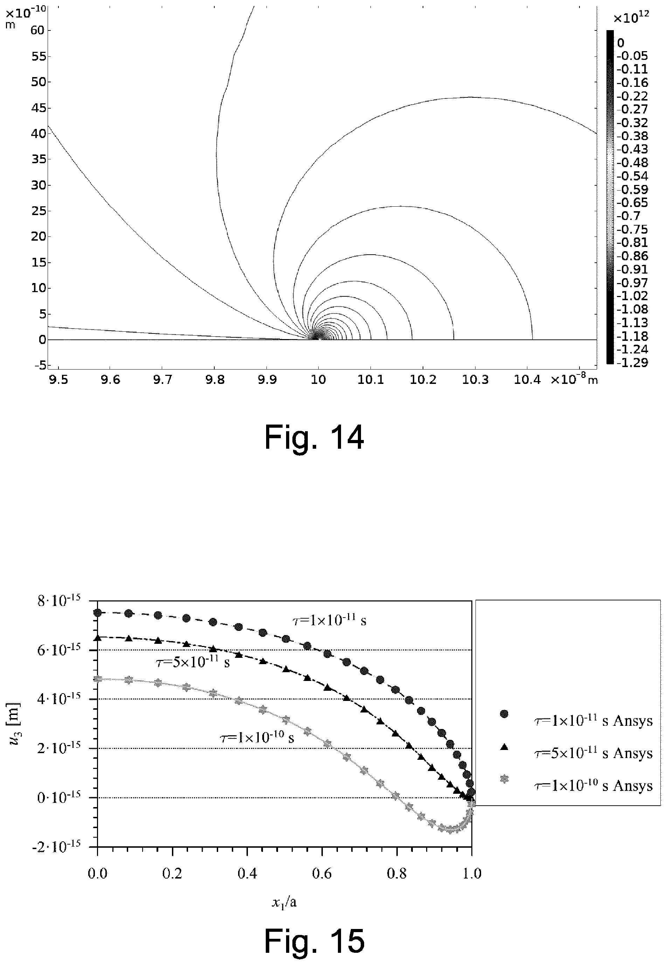

Figure 14 depicts a contour chart of the density of the electric current (A/m$^2$) in the vicinity of the crack's root.

Figure 15 is a comparison of two movements when opening the crack at various points in time.


## Examples of realization

Example 1

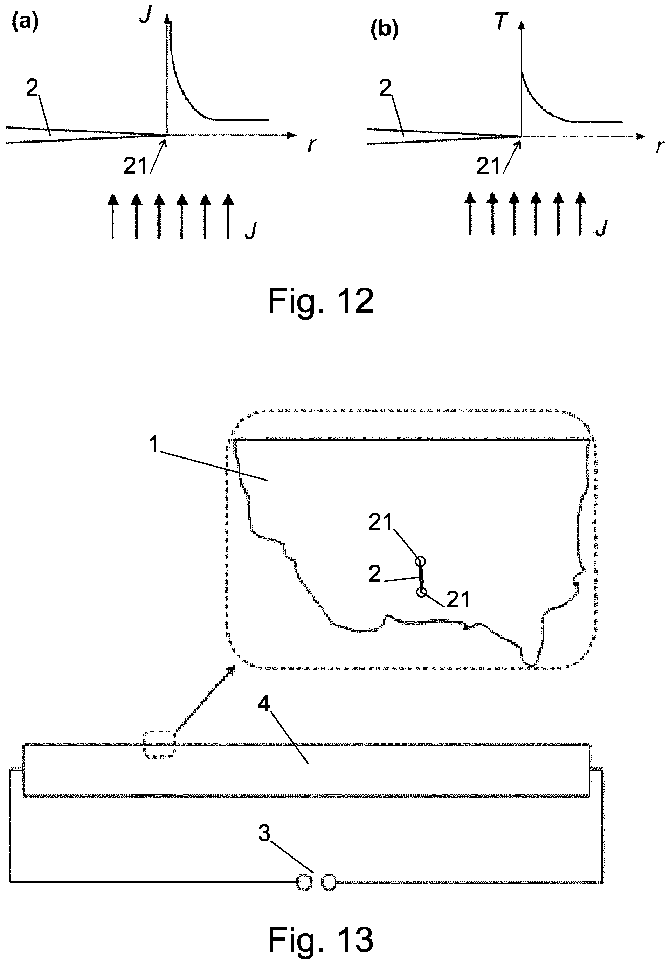

In this example according to Figure 13, a method of increase of the durability of the construction with the crack 2 initiated in the conductive layer 1 of the microelectronic element 4 is described, whereby the conductive layer 1 is from germanium. Microelectronic element 4 is connected to the controlled source 3 of the electric current. The electric current acts by the roots of the crack induces Joule heat; the areas with induced Joule heat are depicted by circles in figure 13. Joule heat produces a non-homogeneous heat field which leads to a stress field; the resulting pressure stress leads to the closing of the crack 2. This stops the growth of crack 2 even without complete closure and without melting of the material of the conductive layer 1. The results are an increase in durability and lifetime of the microelectronic element 4.

The following parameters calculated from the relationships disclosed in the essence of the invention section were used in this example:

- density of the electric current in the conductive layer 1 is at level of $1.10^4$ A.m$^{-2}$,
- density of the electric current in the root 21 of crack 2 is on order of $1.10^{12}$ A.m$^{-2}$,
- electric voltage in the treated microelectronic element 4 is 24 V.

This results in the stopping of the crack, where Figure 12 depicts distribution pursuant to the density of the electric current and the heat field in the vicinity of the root 21 of crack 2.

The values of the abovementioned parameters result in our particular solution of the problem by solving following equations:

- calculation of electric potential by Laplace equation:

$$\Delta \phi = 0$$

- calculation of Joule heat and solution of the non-stationary problem of the conduction of heat by the equation:

$$\lambda_{i,i}(\boldsymbol{x}, \tau) + \rho c \dot{\theta}(\boldsymbol{x}, \tau) = Q$$

- calculation of mechanical fields from the heat fields by the equation:

$$\sigma_{ij,j}(x, \tau) - \mu_{ijk,jk}(x, \tau) = 0$$

- calculation of total deformation without relocation $u_i$ by the equation:

$$\varepsilon_{ij} = \frac{1}{2}\left(u_{i,j} + u_{j,i}\right)$$

- definition of the stress-heat module:

$$\gamma_{ij} = c_{ijkl}\beta_{kl}$$

Example 2

This example discloses a method of improving the lifetime and durability of the constructions with initiated crack 2 according to this invention for an element 4 of the power electronics of an electric cars, which is equipped neither by an active identification of the presence of the crack 2, nor by integrated crack 2 relaxation system.

If a presence of the crack 2 in the component ensuring the passage of an electric current is determined during the periodic inspection of the critical elements of the car by means of the passive system of identification of propagation of the crack 2, the further spread of the crack 2 in the conductive layer 1 of the element 4 and the eventual permanent damage is prevented by external crack 2 relaxation system in such a way that the given electronics element 4 is connected to the electric power source 3, whereby the crack 2 is present in the electronics element 4 and fields with induced Joule heat are produced in the roots 21 of the generated crack 2, whereby the Joule heat affects the stress conditions and ratios in the root 21 of the crack 2 in such a way that its growth stops.

The stopping of the growth of the crack 2 and thereby preventive repair or regeneration of the respective element 4 of the power electronics is conducted without the need to pull the element 4 out of the PCB of the respective module.

Example 3

This example of particular realization discloses a method of improving the lifetime and durability of the constructions with initiated crack 2 according to this invention for an element 4 of the power electronics of an electric car, which is equipped by an active identification of the presence of the crack 2 and by integrated crack 2 relaxation system.

If, during the testing of the critical element 4, the presence of crack 2 is determined, further spread of crack 2 in the element 4 of its volume, and thereby eventual short circuit, is prevented by an integrated crack 2 relaxation system in such a way that the given electronics element 4 is connected to the electric power source 3 by switches, whereby a generated crack 2 is present in the electronics element 4, and fields with induced Joule heat (areas corresponding to circles on figure 13) are produced in the roots 21 of the generated crack 2, whereby the Joule heat affects the stress conditions and ratios in the root 21 of the crack 2 in such a way that its growth stops.

Example 4

In this example the electric device has on its PCB multiple critical elements 4 which are connected on the board with a single controlled electric power source 3. The device does not have a diagnostic module to determine the presence of the cracks, but with each tenth start of the device a preventive treatment of all conductive layers 1 of the elements 4 is activated in such a way that these are subsequently connected through thyristor switches with the controlled source 3 of the electric current. The values of the electric current are set differently for each respective element 4.

Example 5

In this example the subject matter of the invention is disclosed in the following way.

Crack problems in nano-sized elastic structures under the Joule heating are analyzed by the finite element method (FEM). The variational principle is applied for the derivation of coupled electro-thermo-mechanical governing equations. The temperature field is described by classical Fourier's law and it is not influenced by mechanical field. Transient heat conduction is considered since it is the slowest process among all other coupled fields here. Quasi-static conditions are considered for mechanical and electrical fields. Due to higher derivatives in governing equations the conventional FEM cannot be applied. Therefore, the mixed FEM with the $C^0$ continuous interpolation for displacements and strains is developed. The influence of the material characteristic length on the variation of crack opening displacements in finite nano-sized structures under an electric current load is investigated.

The thermo-electric Joule heating is induced in electrically conductive structures under an electric current load. The mechanical responses of these structures are affected by this heating. The electric current density can be concentrated at some structure locations, like crack tips, and a large thermal stress is produced. Even a local melting region around the crack tip may be observed for a large electric current Fortunately, the Joule heating effect induces very often local compressive thermoelastic stresses and melting area at the crack tip arresting crack propagation. A non-uniform temperature and thermal stress distribution occurs since this heating is concentrated around the crack tip. It is responsible for the fracture and failure of materials in electrical and electronic devices.

Experimental works and theoretical analyses on various effects of electric current on material microstructural change and deformation mechanism of materials are frequently published in the literature. However, experimental studies on the macro-mechanical behavior of cracks in conducting materials under the electric current load are relatively seldom.

The stress distribution around the crack tip in conducting materials under a combined electromagnetic and thermal load is investigated by Cai and Yuan. Numerical results showed that the compressive stress state around the crack tip plays a crack arrest effect. Combined electric current and mechanical load on fracture of a thin edge-cracked conductor is investigated by Sharma et al. The FEM is applied there to analyze the interaction between stress fields due to the electric current and the mechanical loads.

Electronic devices are designed very often as multilayered structures to fulfil the multi-functional needs. Due to the mismatch of material properties interface cracks occurred there and it is very important to investigate the Joule heating effect for this kind of cracks. The extended finite element method is applied there for numerical analysis of the electro-thermo-mechanical model. The domain form of the interaction integral is utilized for the evaluation of the complex stress intensity factors and energy release rate for bi-material interface cracks.

The above analyses are performed for macro-sized structures. Therefore, classical continuum mechanics could be applied there. When the specimen size is comparable to the micro-structural lengths, the classical continuum mechanics isn't applicable anymore. The size effect is observed experimentally in elastic nano-sized structures. For optimal design of nano-sized electronic devices, it is needed to apply a theory where the size effect is considered. Nonlocal or gradient theories are applied to analyze boundary value problems in nano-sized structures. The large strain gradients and dislocations are occurring at the crack tip vicinity. Huang et al. applied the gradient theory for the investigation of the near-tip fields for a crack in macro-sized structures. Due to the local character of the joule heating the strains are non-uniform with large strain gradients mainly in the crack tip vicinity. Therefore, the gradient elasticity theory appears most suited for studying the strain and stress fields near the crack-tip at the microscale due to the large strain and localized Joule heating in its vicinity.

The influence of cracks on distributions of temperature and stresses in cracked specimens subject to direct thermal flow has been studied extensively in many works. However, specific thermal effects caused by the Joule heat generation of electric current flow around the crack tip are solved in literature very seldom. Boundary value problems for cracks under the Joule heating are very complex due to the coupling of electro-thermo-mechanical fields and higher derivatives in advanced continuum theory for nano-sized structures. Therefore, numerical solutions are needed to solve these general problems. The finite element method (FEM) has become an attractive method to simulate problems numerically. To the best of the authors' knowledge, up to date all numerical methods applied to these multi-physical problems are solved only in macro-sized structures and they are described by classical continuum mechanics for pure elastic solids. In this study, the above problem is described by the gradient theory for elastic solids. It leads to higher ordered partial differential equations than in the corresponding classical case. The principle of virtual work is applied to derive the finite element equation for a general 2d boundary value problem with cracks. The collocation mixed FEM with large strain gradients is applied to our multiphysical problem, where the $C^0$ continuous approximation is applied independently to displacements and strains and kinematic constraints between strains and displacements are satisfied by the collocation method. Similarly, the isogeometric analysis via non-uniform rational B-spline functions with higher-order continuity can be applied effectively to this problem. The collocation mixed FEM is applied in the present paper to solve crack problems with Joule heating.

**Basic equations for gradient theory in an electro-thermo-mechanical problem**

Since the response of electromagnetic fields is much faster than the response of elastic fields and the response of thermal fields much slower than the response of elastic fields, one can consider the steady-state electric field and quasi-static approximation for elastic fields in considered multi-field problem. The governing equation for the electric current results from the law of electric charge conservation, which in steady-state conditions is given as

$$J_{i,i} = 0 \tag{1}$$

According to the Ohm's law, the electric current and the electric intensity vector $E_j$ in conductors connected to a source of electro-motoric force are correlated as

$$J_i = s_{ij}E_j, \qquad E_j = -\phi_{,j} \tag{2}$$

where $s_{ij}$ is the tensor of electrical conductivity and $\phi$ is the scalar electric potential Thus, the steady-state electric potential in a conductor is governed by a Laplace equation

$$\Delta\phi = 0 \tag{3},$$

and the flux of the electric field as well as the electric current exhibit a singularity at the crack tip owing to vanishing values on the crack faces.

According to Joule-Lenz law, the power of heating generated by an electrical conductor is

$$Q = E_i J_i = s_{ij}E_i E_j = s_{ij}\phi_{,i}\phi_{,j} \tag{4}.$$

This source of thermal fields is huge near the crack tip. After switching the electric current, the transient heat conduction is governed by the equation

$$\lambda_{i,i}(\boldsymbol{x},\tau) + \rho c \dot{\theta}(\boldsymbol{x},\tau) = Q \tag{5},$$

where the heat flux vector $\lambda_i$ is given according to Fourier's law as

$$\lambda_i(\mathbf{x},\tau) = -\kappa_{ij}\theta_{,j}(\mathbf{x},\tau),$$

with $\kappa_{ij}$, $\rho$ and c is the heat conduction, mass density and specific heat, respectively.

The temperature elevation is given by $\theta = T - T_0$ with the reference temperature $T_0$ being also the initial temperature in the conductor.

Being interested in nano-sized structures, we consider a higher-grade continuum model includes strain gradients in constitutive equations for a thermo-electromechanical problem in electrically conductive materials. The elastic strains and their gradients yield classical stresses $\sigma_{ij}$, and higher-order stresses $\mu_{jkl}$, respectively given as

$$\sigma_{ij} = c_{ijkl}\varepsilon_{kl}^e = c_{ijkl}\varepsilon_{kl} - \gamma_{ij}\theta,$$

$$\mu_{jkl} = g_{jklmni}\eta_{nmi}^e \qquad (6),$$

where coefficients c and g denote the fourth-order elastic tensor and the higher-order elastic tensor, respectively. The elastic strains and their gradients are given as

$$\varepsilon_{ij}^e = \varepsilon_{ij} - \beta_{ij}\theta, \qquad \eta_{ijk}^e = \varepsilon_{ij,k}^e \qquad (7),$$

where $\beta_{kl}$ is the tensor of linear thermal expansion coefficients.

The total strain tensor components $\varepsilon_{ij}$ are related to the displacements $u_i$ by

$$\varepsilon_{ij} = \frac{1}{2}\left(u_{i,j} + u_{j,i}\right) \qquad (8).$$

The stress-temperature modulus $\gamma_{ij}$ is defined as

$$\gamma_{ij} = c_{ijkl}\beta_{kl} \qquad (9).$$

To simplify the problem in gradient elasticity, the additional material coefficients are reduced to one micro-stiffness length parameter $l$ and the higher-order elastic parameters $g_{jklmni}$ are assumed to be proportional to the conventional elastic stiffness coefficients $c_{klmn}$

$$g_{jklmni} = l^2 c_{jkmn}\delta_{li} \qquad (10).$$

with $\delta_{li}$ being the Kronecker delta.

Transversely isotropic mechanical properties are considered for elastic solids. Using the Voigt notation, the constitutive equations (6) and (2) under plane-strain conditions in the $(x_1,x_3)$-plane can be expressed in the matrix form as

$$\{\boldsymbol{\sigma}\} = \begin{pmatrix} \sigma_{11} \\ \sigma_{33} \\ \sigma_{13} \end{pmatrix} = \begin{pmatrix} c_{11} & c_{13} & 0 \\ c_{13} & c_{33} & 0 \\ 0 & 0 & c_{44} \end{pmatrix}\begin{pmatrix} \varepsilon_{11} \\ \varepsilon_{33} \\ 2\varepsilon_{13} \end{pmatrix} - \begin{pmatrix} \gamma_{11} \\ \gamma_{33} \\ 0 \end{pmatrix}\theta = [\mathbf{C}]\boldsymbol{\varepsilon} - \{\boldsymbol{\gamma}\}\theta \qquad (11),$$

$$\boldsymbol{\mu} = \begin{bmatrix} \mu_{111} \\ \mu_{331} \\ \mu_{131} \\ \mu_{113} \\ \mu_{333} \\ \mu_{133} \end{bmatrix} = l^2 \begin{bmatrix} c_{11} & c_{13} & 0 & 0 & 0 & 0 \\ c_{13} & c_{33} & 0 & 0 & 0 & 0 \\ 0 & 0 & c_{44} & 0 & 0 & 0 \\ 0 & 0 & 0 & c_{11} & c_{13} & 0 \\ 0 & 0 & 0 & c_{13} & c_{33} & 0 \\ 0 & 0 & 0 & 0 & 0 & c_{44} \end{bmatrix} \begin{bmatrix} \eta^e_{111} \\ \eta^e_{331} \\ 2\eta^e_{131} \\ \eta^e_{113} \\ \eta^e_{333} \\ 2\eta^e_{133} \end{bmatrix} = l^2[G]\boldsymbol{\eta}^e$$

(12),

$$\boldsymbol{J} = \begin{bmatrix} J_1 \\ J_3 \end{bmatrix} = \begin{bmatrix} s_{11} & 0 \\ 0 & s_{33} \end{bmatrix} \begin{bmatrix} E_1 \\ E_3 \end{bmatrix} = [S]\boldsymbol{E}$$

(13).

The heat flux vector in matrix form is written as

$$\begin{pmatrix} \lambda_1 \\ \lambda_3 \end{pmatrix} = -[K] \begin{pmatrix} \theta_{,1} \\ \theta_{,3} \end{pmatrix}, \quad [K] = \begin{pmatrix} k_{11} & k_{13} \\ k_{13} & k_{33} \end{pmatrix}.$$

In the earlier paper, we derived the governing equations for gradient uncoupled thermoelasticity. The governing equations for mechanical fields are given as

$$\sigma_{ij,j}(\boldsymbol{x},\tau) - \mu_{ijk,jk}(\boldsymbol{x},\tau) = 0$$

(14)

and the electric fields are governed by Eqs. (1) and (3).

Thus, the electric fields are independent of elastic and thermal fields, while the thermal fields are affected by the electric fields and the elastic fields by the temperature field. The time dependence of elastic fields is only parametric dependence without taking into account the inertial effects. The governing equation (14) together with the heat conduction equation (5) (supplemented with Joule heating source (4)), and the equation for electric potential (3) give a unique system of partial differential equations for considered thermo-electro-elastic problems in electric conductors of nano-scale dimensions and connected to closed circuits. Following boundary conditions are associated with a general boundary value problem:

Essential b.c.:

$$u_i(\boldsymbol{x},\tau) = \overline{u}_i(\boldsymbol{x},\tau) \text{ on } \Gamma_u, \quad \Gamma_u \subset \Gamma$$

$$s_i(\boldsymbol{x},\tau) = \overline{s}_i(\boldsymbol{x},\tau) \text{ on } \Gamma_s, \quad \Gamma_s \subset \Gamma$$ (15)

$$\theta(\boldsymbol{x},\tau) = \overline{\theta}(\boldsymbol{x},\tau) \text{ on } \Gamma_\theta, \quad \Gamma_\theta \subset \Gamma$$

$$\phi(\mathbf{x}) = \overline{\phi}(\mathbf{x}) \text{ on } \Gamma_\phi, \quad \Gamma_\phi \subset \Gamma$$

Natural b.c.:

$$t_i(\mathbf{x}, \tau) = \overline{t}_i(\mathbf{x}, \tau) \text{ on } \Gamma_t, \quad \Gamma_t \cup \Gamma_u = \Gamma, \quad \Gamma_t \cap \Gamma_u = \varnothing$$

$$R_i(\mathbf{x}, \tau) = \overline{R}_i(\mathbf{x}, \tau) \text{ on } \Gamma_R, \quad \Gamma_R \cup \Gamma_s = \Gamma, \quad \Gamma_R \cap \Gamma_s = \varnothing \qquad (16),$$

$$Z(\mathbf{x}, \tau) = \overline{Z}(\mathbf{x}, \tau) \text{ on } \Gamma_Z, \quad \Gamma_Z \cup \Gamma_\theta = \Gamma, \quad \Gamma_Z \cap \Gamma_\theta = \varnothing$$

$$H(\mathbf{x}) = \overline{H}(\mathbf{x}) \text{ on } \Gamma_H, \quad \Gamma_H \cup \Gamma_\phi = \Gamma, \quad \Gamma_H \cap \Gamma_\phi = \varnothing$$

where $n_i$ and $\pi_i$ are the Cartesian components of the unit normal and tangent vector on $\Gamma$, respectively, $s_i := \partial u_i / \partial n = n_j u_{i,j}$, $R_i := n_k n_j \mu_{ijk}$. The traction vector in gradient theory is defined as

$$t_i = n_j \left( \sigma_{ij} - \mu_{ijk,k} \right) - \frac{\partial \rho_i}{\partial x_j} \pi_j + \sum_c \left\| \rho_i(x^c) \right\| \delta(x - x^c) \qquad (17),$$

$$\rho_i := n_k \pi_j \mu_{ijk} \qquad (18),$$

and the jump at a corner on the oriented boundary contour $\Gamma$ is defined as $\|\rho_i(x^c)\| := \rho_i(x^c - 0) - \rho_i(x^c + 0)$

The thermal flux is defined as $Z := n_i \lambda_i$ and the flux of electric current through the surface is $H := n_j J_j$.

Symbol $\Gamma_u$ is the part of the global boundary $\Gamma$ with prescribed displacements, while on $\Gamma_t$, $\Gamma_\theta$, $\Gamma_Z$, $\Gamma_s$, $\Gamma_R$, $\Gamma_\phi$ and $\Gamma_H$ are used for the traction vector, temperature, heat flux, normal derivative of the displacement vector, high-order traction vector, electric potential and current flux, respectively. The overbar values are used for prescribed boundary values.

**Finite element method formulation**

The weak form of the governing equation (3) can be written as

$$\int_V J_i \delta\phi_{,i} dV = \int_{\Gamma_H} \overline{H} \delta\phi d\Gamma \qquad (19),$$

where $H := n_j J_j$.

Since uncoupled thermoelasticity is considered, the heat conduction problem is analyzed separately and the weak/variational forms are given by

$$\int_V \left( \lambda_i \delta\theta_{,i} - \rho c \dot{\theta} \delta\theta \right) dV = -\int_V E_i J_i \delta\theta dV + \int_{\Gamma_Z} \overline{Z} \delta\theta d\Gamma \qquad (20),$$

where $\delta\theta$ is the variation of temperature, which vanishes on $\Gamma_\theta = \Gamma - \Gamma_Z$, i.e. $\delta\theta|_{\Gamma - \Gamma_Z} = 0$.

The weak form of the above-derived boundary-value problem for mechanical fields can be written as

$$\int_V \left( \sigma_{ij} \delta u_{i,j} + \mu_{ijk} \delta u_{i,jk} \right) dV = \int_{\Gamma_t} \overline{t}_i \delta u_i d\Gamma + \int_{\Gamma_R} \overline{R}_i \delta s_i d\Gamma \qquad (21),$$

Vanishing variation of primary fields in the above weak form results in:

$$\delta u_i|_{\Gamma - \Gamma_t} = 0, \quad \delta s_i|_{\Gamma - \Gamma_R} = 0.$$

The mixed FEM is developed in this paragraph due to the presence higher order of partial derivatives in the weak form (21). Then, $C^0$ continuous interpolation is applied independently for both displacements and strains. However, the kinematic equation (8) has to be satisfied. This constraint between strains and displacement components is satisfied by collocation at selected internal points of elements. Interior nodes 5-8 do not increase the degree of freedom (DOF) in the final system of algebraic equations. They are used only to satisfy constraints between strains and displacements.

The standard finite element approximation for mechanical displacements, temperature and electric potential is expressed in terms of nodal values and shape functions

$$\mathbf{u} = \mathbf{N}_u\left(\xi_1, \xi_2\right)\mathbf{q}_u \,,$$

$$\theta = \mathbf{N}_\theta\left(\xi_1, \xi_2\right)\mathbf{q}_\theta \,,$$

$$\phi = \mathbf{N}_\phi\left(\xi_1, \xi_2\right)\mathbf{q}_\phi \tag{22},$$

where nodal quantities $\mathbf{q}_u$, $\mathbf{q}_\theta$ and $\mathbf{q}_\phi$ are used for displacements, temperature, and electric potential, respectively.

Approximations for strains, normal derivative of displacements, electric intensity vector and gradients of temperature are obtained from the approximation of primary fields (22) as:

$$\boldsymbol{\varepsilon} = \begin{bmatrix} \varepsilon_{11} \\ \varepsilon_{33} \\ 2\varepsilon_{13} \end{bmatrix} = \begin{bmatrix} \partial_1 & 0 \\ 0 & \partial_3 \\ \partial_3 & \partial_1 \end{bmatrix} \begin{bmatrix} u_1 \\ u_3 \end{bmatrix} = \mathbf{B}_u(\xi_1, \xi_2)\mathbf{q}_u \qquad \mathbf{s} = \left(n_1\partial_1 + n_3\partial_3\right)\begin{bmatrix} u_1 \\ u_3 \end{bmatrix} = \mathbf{B}_s(\xi_1, \xi_2)\mathbf{q}_u$$

$$\begin{bmatrix} E_1 \\ E_3 \end{bmatrix} = -\begin{bmatrix} \phi_{,1} \\ \phi_{,3} \end{bmatrix} = -\begin{bmatrix} \partial_1 \\ \partial_3 \end{bmatrix}\phi = -\mathbf{B}_\phi(\xi_1, \xi_2)\mathbf{q}_\phi \qquad \begin{bmatrix} \theta_{,1} \\ \theta_{,3} \end{bmatrix} = \begin{bmatrix} \partial_1 \\ \partial_3 \end{bmatrix}\theta = \mathbf{B}_\theta(\xi_1, \xi_2)\mathbf{q}_\theta \tag{23}.$$

The expressions for matrices $\mathbf{B}.(\xi_1, \xi_2)$ in terms of partial derivatives of shape functions with respect to intrinsic coordinates can be found in. For the independent approximation of strains in the mixed FEM one can write:

$$\hat{\boldsymbol{\varepsilon}}^{In} = \mathbf{A}_\varepsilon\left(\xi_1, \xi_2\right)\boldsymbol{\alpha} \tag{24},$$

where $\alpha$ is the matrix composed of undetermined coefficients defined separately for each component of the strain tensor.

In a 2D problem, the polynomial function matrix for a simple 4-node quadrilateral element can be given by

$$\mathbf{A}_\varepsilon\left(\xi_1, \xi_2\right) = \begin{bmatrix} 1 & \xi_1 & \xi_2 & \xi_1\xi_2 \end{bmatrix} \tag{25}.$$

Unknown $\alpha$ coefficients are obtained from the coincidence of two independent approximations (23) and (24) at selected Gauss quadrature points $\xi^c = (\xi_1^c, \xi_2^c)$, i.e.

$$\mathbf{A}_\varepsilon(\xi^c)\boldsymbol{\alpha} = \mathbf{B}_u(\xi^c)\mathbf{q}_u \tag{26}.$$

Hence,

$$\boldsymbol{\alpha} = \mathbf{A}_\varepsilon^{-1}(\boldsymbol{\xi}^c)\mathbf{B}_u(\boldsymbol{\xi}^c)\mathbf{q}_u \tag{27}$$

and the final expression for the independent strain approximation is given by

$$\hat{\boldsymbol{\varepsilon}}^{In} = \mathbf{A}_\varepsilon(\xi_1,\xi_2)\mathbf{L}\mathbf{q}_u \tag{28},$$

where $\mathbf{L} = \mathbf{A}_\varepsilon^{-1}(\boldsymbol{\xi}^c)\mathbf{B}_u(\boldsymbol{\xi}^c)$.

We also need an approximation of strain gradients. It is easily obtained from the approximation formula (28)

$$\hat{\boldsymbol{\eta}}^{In} = \begin{bmatrix}\partial_1\\\partial_3\end{bmatrix}\hat{\boldsymbol{\varepsilon}}^{In} = \begin{bmatrix}\partial_1\\\partial_3\end{bmatrix}\mathbf{A}_\varepsilon(\xi_1,\xi_2)\boldsymbol{\alpha} = \mathbf{A}_\varepsilon^*(\xi_1,\xi_2)\boldsymbol{\alpha} = \mathbf{A}_\varepsilon^*(\xi_1,\xi_2)\mathbf{L}\mathbf{q}_u \tag{29}.$$

The elastic strain gradient is approximated by

$$\hat{\boldsymbol{\eta}}^{eIn} = \mathbf{A}_\varepsilon^*(\xi_1,\xi_2)\mathbf{L}\mathbf{q}_u - \boldsymbol{\beta}\mathbf{B}_\theta(\xi_1,\xi_2)\mathbf{q}_\theta \tag{30}.$$

Substituting the above approximations into the weak forms (19)-(21) we get:

$$-\{\delta\mathbf{q}_\phi\}^T\left(\int_V \mathbf{B}_\phi^T(\boldsymbol{\xi})\mathbf{S}\mathbf{B}_\phi(\boldsymbol{\xi})dV\right)\{\mathbf{q}_\phi\} = \{\delta\mathbf{q}_\phi\}^T \int_{\Gamma_H} \mathbf{N}_\phi^T\overline{\mathbf{H}}d\Gamma \tag{31},$$

$$-\{\delta\mathbf{q}_\theta\}^T\left[\left(\int_V \mathbf{B}_\theta^T(\boldsymbol{\xi})\mathbf{K}\mathbf{B}_\theta(\boldsymbol{\xi})dV\right)\{\mathbf{q}_\theta\} + \left(\int_V \mathbf{N}_\theta^T(\boldsymbol{\xi})\rho c\mathbf{N}_\theta(\boldsymbol{\xi})dV\right)\frac{d}{d\tau}\{\mathbf{q}_\theta\}\right] +$$
$$+\{\delta\mathbf{q}_\theta\}^T\left(\int_V \mathbf{N}_\theta^T(\boldsymbol{\xi})\{\mathbf{q}_\phi\}^T\left[\mathbf{B}_\phi^T(\boldsymbol{\xi})\mathbf{S}\mathbf{B}_\phi(\boldsymbol{\xi})\right]dV\right)\{\mathbf{q}_\phi\} = \{\delta\mathbf{q}_\theta\}^T \int_{\Gamma_Z} \mathbf{N}_\phi^T\overline{\mathbf{Z}}d\Gamma \tag{32},$$

$$\{\delta\mathbf{q}_u\}^T\left[\left(\int_V \mathbf{B}_u^T(\boldsymbol{\xi})\mathbf{C}\mathbf{B}_u(\boldsymbol{\xi})dV\right)\{\mathbf{q}_u\} - \left(\int_V \mathbf{B}_u^T(\boldsymbol{\xi})\gamma\mathbf{N}_\theta(\boldsymbol{\xi})dV\right)\{\mathbf{q}_\theta\}\right] +$$
$$+l^2\{\delta\mathbf{q}_u\}^T\mathbf{L}^T\left[\left(\int_V \mathbf{A}_\varepsilon^{*T}(\boldsymbol{\xi})\mathbf{G}\mathbf{A}_\varepsilon^*(\boldsymbol{\xi})dV\right)\mathbf{L}\{\mathbf{q}_u\} - \left(\int_V \mathbf{A}_\varepsilon^{*T}(\boldsymbol{\xi})\mathbf{G}\boldsymbol{\beta}\mathbf{B}_\theta(\boldsymbol{\xi})dV\right)\{\mathbf{q}_\theta\}\right] =$$
$$= \{\delta\mathbf{q}_u\}^T \int_{\Gamma_t} \mathbf{N}_u^T\overline{\mathbf{T}}d\Gamma + \{\delta\mathbf{q}_u\}^T \int_{\Gamma_R} \mathbf{B}_s^T\overline{\mathbf{R}}d\Gamma \tag{33}.$$

From the variational statements (31)-(33) valid for arbitrary variations $\{\delta\mathbf{q}_u\}$, $\{\delta\mathbf{q}_\phi\}$ and $\{\delta\mathbf{q}_\theta\}$, we obtain four nonlinear algebraic equations

$$\left(\int_V \mathbf{B}_\phi^T(\xi)\mathbf{S}\mathbf{B}_\phi(\xi)dV\right)\{\mathbf{q}_\phi\} = -\int_{\Gamma_H} \mathbf{N}_\phi^T \overline{\mathbf{H}}d\Gamma$$

(34),

$$\left[\left(\int_V \mathbf{B}_\theta^T(\xi)\mathbf{K}\mathbf{B}_\theta(\xi)dV\right) + \left(\int_V \mathbf{N}_\theta^T(\xi)\rho c\mathbf{N}_\theta(\xi)dV\right)\frac{d}{d\tau}\right]\{\mathbf{q}_\theta\} =$$

$$= \left(\int_V \mathbf{N}_\theta^T(\xi)\{\mathbf{q}_\phi\}^T\left[\mathbf{B}_\phi^T(\xi)\mathbf{S}\mathbf{B}_\phi(\xi)\right]dV\right)\{\mathbf{q}_\phi\} - \int_{\Gamma_Z} \mathbf{N}_\phi^T \overline{\mathbf{Z}}d\Gamma$$

(35),

$$\left[\left(\int_V \mathbf{B}_u^T(\xi)\mathbf{C}\mathbf{B}_u(\xi)dV\right) + l^2\mathbf{L}^T\left(\int_V \mathbf{A}_\varepsilon^{*T}(\xi)\mathbf{G}\mathbf{A}_\varepsilon^*(\xi)dV\right)\mathbf{L}\right]\{\mathbf{q}_u\} =$$

$$= \left[\left(\int_V \mathbf{B}_u^T(\xi)\gamma\mathbf{N}_\theta(\xi)dV\right) + l^2\mathbf{L}^T\left(\int_V \mathbf{A}_\varepsilon^{*T}(\xi)\mathbf{G}\boldsymbol{\beta}\mathbf{B}_\theta(\xi)dV\right)\right]\{\mathbf{q}_\theta\} + \int_{\Gamma_t} \mathbf{N}_u^T \overline{\mathbf{T}}d\Gamma + \int_{\Gamma_R} \mathbf{B}_s^T \overline{\mathbf{R}}d\Gamma$$

(36).

The electric field is uncoupled with mechanical and thermal fields. Therefore, in the first step equation (34) is solved. Then, for known electric potential, the Joule heat is calculated and the non-stationary heat conduction problem described by equation (35) is solved. Finally, for known thermal fields one can compute mechanical fields from equation (36).

**Numerical results**

In the numerical example titanium alloy Ti-6Al-4V is considered. It has the following material constants:

$$c_{11} = 12.8\times10^{10}\,\text{Pa}, \quad c_{13} = 4.22\times10^{10}\,\text{Pa}, \quad c_{33} = 12.8\times10^{10}\,\text{Pa}, \quad c_{44} = 4.28\times10^{10}\,\text{Pa},$$

$$s_{11} = 5.83\times10^5\,\text{A/Vm}, \quad s_{33} = 5.7\times10^5\,\text{A/Vm}, \quad \kappa_{11} = 7.373\,\text{W/Km}, \quad \kappa_{22} = 7.3\,\text{W/Km},$$

$$\beta_{11} = \beta_{33} = 8.7\times10^{-6}\,1/\text{K}, \quad \rho = 4.5\times10^3\,\text{kg/m}^3, \quad c = 560\,\text{J/kgK}$$

(40).

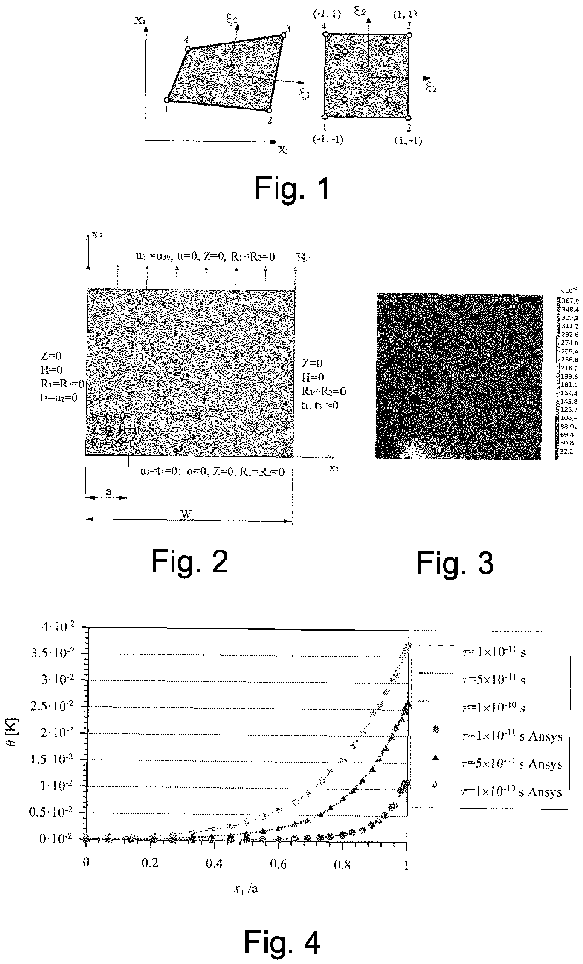

In the considered example a central crack in a square plate is analyzed, with the geometric parameters $w = 5a$, $a = 1.0\times10^{-7}$ m. On the bottom and top surfaces, there is a prescribed uniform electric current density $H_0 = 10^4 A/m^2$. Due to symmetries only one-quarter of the cracked plate is analyzed numerically (see Fig. 2). The heat flux is vanishing on the whole boundary of the analyzed domain. Furthermore, on the crack surface and the right lateral side $H = 0$, $t_1 = t_3 = 0$; on the left side $H = 0$, $u_1 = t_3 = 0$; on the top side $H = H_0$, $t_1 = 0$, displacement $u_3 = u_{30} = 2\times10^{-14}$ $m$; and ahead the crack tip $\phi = 0$, $t_1 = u_3 = 0$. Additional boundary conditions in the gradient theory need to be supplied as one can see in equations (15) and (16). It is considered a vanishing traction vector for higher-order stresses on all surfaces, $R_i = 0$. The Joule heating is a stationary heat source (see eq. (4)) which generates a non-stationary temperature distribution. For the time evolution of the temperature field, we assume the initial value of the temperature $\theta(\mathbf{x}, t = 0) = 0$. The superposition of the mechanical loading (prescribed mechanical displacement on the top surface) and thermal loading by Joule heating yield certain finite value of the crack opening displacement at the initial time instant. After switching on the electric current, the Joule heating produces the compressive stresses which are growing in time in the sample with thermally isolated boundary. One can expect the crack closure starting near the crack tip. The correct treatment of the crack closure process would require a redefinition of boundary conditions because of contacted crack faces. Release of the top side fixation would result in relaxing compression stresses, but the increase in temperature could be stopped only by removing thermal insulation on the boundary of the specimen or by switching off the electric current flow.

The heat source caused by the joule heating affects the distribution of the temperature. The contour plot of the temperature distribution at a certain time instant is presented in Fig.3. The comparison of the temperature profiles is shown in Fig.4. The results obtained by the present approach (Mixed FEM) are in good agreement with those obtained by ANSYS. The thermal problem is described by the classical heat conduction equation and the ANSYS code for this uncoupled thermo-elastic problem can be utilized. As expected, the maximum temperature occurs at the crack tip.

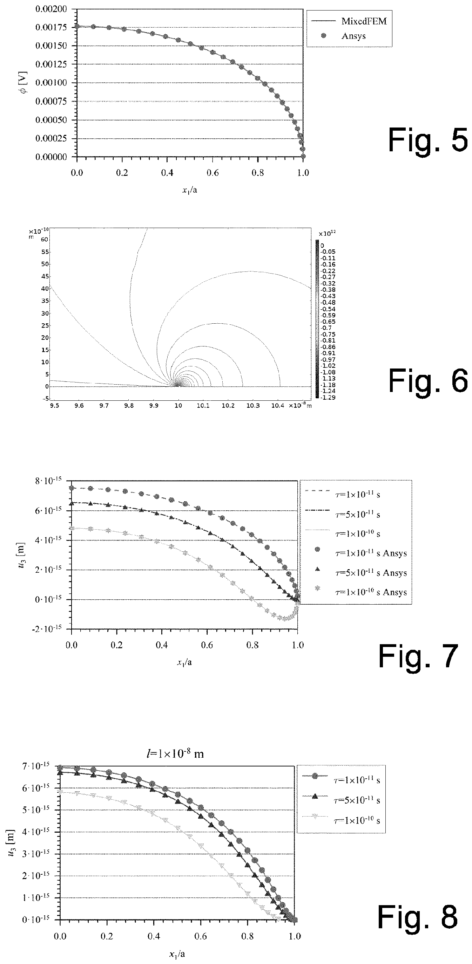

The distribution of the electric potential and comparison of the results with Ansys are shown in Fig.5. The results obtained by Mixed FEM correlate with results obtained by ANSYS code. The electric potential is vanishing ahead of the crack tip. Fig.6 shows singularity of the electric current density $J_2$.

The verification of the code for classical theory ($l = 0$) has been done and the results for crack opening displacements are shown in Fig.7. The results are in good agreement with those obtained by Ansys. At a certain time instant, the crack closure occurs on a portion of the original crack faces. For further evolution, a redefinition of the boundary value problem would be required. Therefore, only the solutions with finite crack opening displacements (negligible zone of face contact) can be supposed as relevant for the considered boundary value problem.

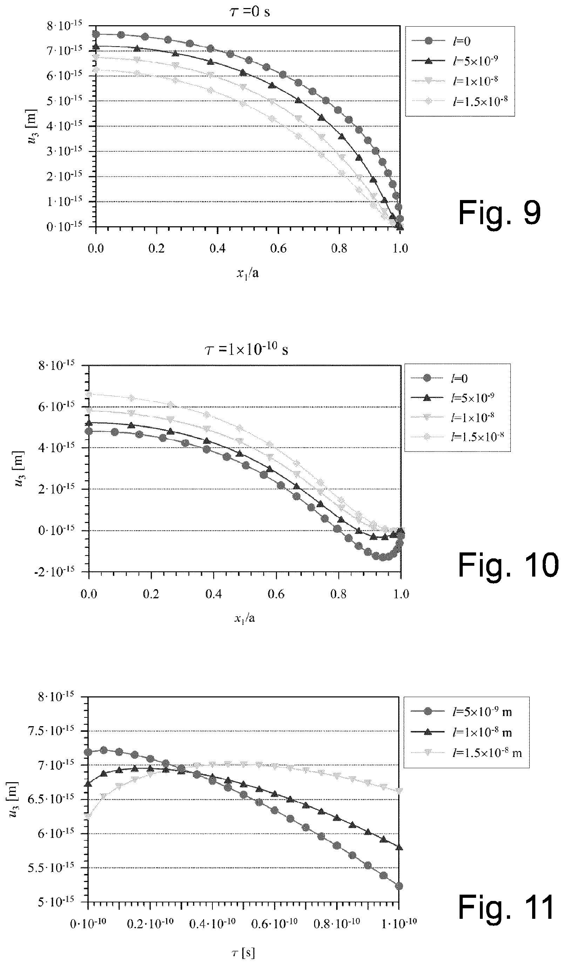

Figure 8 shows the crack opening displacements for various time instants within strain gradient elasticity. The finite value of the micro-stiffness length parameter in gradient theory affects the shape of the crack opening displacement curves mainly at the crack tip vicinity, where large strain gradients are occurring. One can observe the size effect on the crack opening displacements in Fig.9. Results for a pure mechanical load and various micro-stiffness length parameters are given in Fig. 9. Then, the crack opening displacements are reduced as the micro-stiffness length parameter increases. The structure becomes stiffer. To see the influence of the Joule heating on the crack opening displacement, we compare results for a pure mechanical load (at time instant $\tau = 0s$) with results for a finite time instant, when the Joule heating is superposed with the mechanical load. Results for a superposed thermo-mechanical load at time instant $\tau = 1\times10^{-10}$ $s$ are shown in Fig.10. Since the crack is closing due to the Joule heating compression, the increasing stiffness reduces the crack closure for large values of the micro-stiffness length parameter.

Figure 11 shows the time evolution of the maximum crack opening displacements for various values of the micro-stiffness length parameter. The crack closure started in $\tau = 0$ at the crack tip and the distribution of displacements on the whole crack is affected. If the micro-stiffness length parameter is sufficiently large, the maximum crack opening displacements can grow at early time instants.

**Conclusions**

The gradient theory of elasticity is applied to crack problems in electrically conductive elastic structures under combined mechanical and Joule heating loads. Near the crack tip, there are evident spatial concentrations of strain gradients as well as the electric current and the heat source generated by the electric current. Therefore, the strain gradients are included in the free energy density within higher-grade continuum theory, which leads to size effects, i.e. the response is dependent on the ratio of the micro-length scale parameter and the characteristic length of the sample. The size effects disappear when that ratio is very small. Within the uncoupled thermoelasticity, the heat conduction problem can be solved independently of the calculation of mechanical and electrical fields.

General 2D boundary value thermo-electro-elastic problems for nano-sized structures with cracks under a thermal load are analyzed. The mixed FEM formulation has been developed for the solution of related boundary value problems. The results of some numerical simulations are presented and discussed; they serve to validate the formulations derived in this study. The plate with a central crack is subjected to tensional displacement loading, stationary electric current and thermally insulated boundary. After switching on the electric current, the crack closure is starting due to the compressive stresses generated by stationary Joule heating. It is observed that micro-stiffness affects the shape of the crack opening displacement curves mainly at the crack tip vicinity, because of large strain gradients. The structure becomes stiffer with increasing the micro-stiffness. It is confirmed by two observations. At the initial time instant, the crack opening displacements are reduced as the micro-stiffness length parameter increases. On the other hand, at a finite time instant after starting the crack closure, this is reduced by increasing the micro-stiffness length parameter. Accordingly, at a certain time instant, the extent of the contact zone is smaller in samples with higher value of the micro-stiffness length parameter.

**List of symbols for example 5**

$J_i$ - electric current density vector
$s_{ij}$ -electric conductivity tensor
$E_j$ -electric intensity vector
$\phi$ -scalar potential of electric field
$\lambda_i$ -heat flux vector

$Q$ -heat source

$\kappa_{ij}$ -thermal conductivity

P -mass density

$c$ -specific heat

$\sigma_{ij}$ -Cauchy stress tensor

$\mu_{jkl}$ -higher order stress tensor

$c_{ijkl}$ -the fourth-order elastic tensor

$g_{jklmni}$ -higher order elastic tensor

$\beta_{kl}$ - tensor of linear thermal expansion coefficients

$\varepsilon_{ij}$ -total strain tensor

$l$-micro-stiffness length parameter

$u_i(x,\tau)$ -displacements

$s_i(\mathbf{x},\tau)$ -normal derivative of displacements

$\theta(x,\tau)$ -temperature difference

$t_i(\mathbf{x},\tau)$ -traction vector

$R_i(\mathbf{x},\tau)$ -higher order traction vector

$Z(\mathbf{x},\tau)$ -heat flux

$H(\mathbf{x})$ -flux of electric current density vector

$\xi_i$ -isoparametric coordinates

$\mathbf{q}_u, \mathbf{q}_\theta, \mathbf{q}_\phi$ - vector of nodal values for displacements, temperature, electric potential

$\hat{\varepsilon}^{In}$ - independent strain approximation

$\hat{\mathbf{A}}_\varepsilon(\xi_1,\xi_2)$ -polynomial function matrix

$\hat{\eta}^{eIn}$ - strain gradients

$w$ -plate width

$a$ -crack length

## Industrial applicability

Industrial applicability is obvious. According to this invention, it is possible to industrially and repeatedly treat and stop the growth of a crack in the conductive layer of the microstructure and/or nanostructure of the electric and/or electronic element and the device for its realization. At the same time, it is possible to produce and use sources for the generation of Joule heat according to this invention.

## List of symbols

1 - conductive layer

2- crack

21 - crack's root

3- electric power source

4- element

## Claims

1. A method of stopping a crack in a conductive layer of a microstructure and/or a nanostructure of an electric and/or an electronic element, which includes activity of an electric current in the conductive layer (1), where a passage of the electric current produces Joule heat in a vicinity of the crack (2), i s **characterized by the fact**, that heating of the conductive layer (1) by the Joule heat in the vicinity of the crack (2) without melting of the conductive layer (1) produces pressure stress leading to at least partial closing of the crack (2), whereby an influence of the Joule heat produces a non-homogeneous heat field in the vicinity of the crack (2) and by a root (21) of the crack (2) to produce the pressure stress leading to the closing of the crack (2).

2. The method of stopping the crack in the conductive layer of the microstructure and/or the nanostructure of the electric and/or the electronic element according to the claim 1 is **characterized by the fact,** that the influence of the electric current lasts up to 5 seconds, preferably up to 1 second, especially preferably within $1.10^{-15}$ to $1.10^{-5}$ seconds.

3. The method of stopping the crack in the conductive layer of the microstructure and/or the nanostructure of the electric and/or the electronic element according to the claim 1 or2 is **characterized by the fact**, that a density of the electric current in the conductive layer (1) is more than $1.10^4$ A.m$^{-2}$.

4. The method of stopping the crack in the conductive layer of the microstructure and/or the nanostructure of the electric and/or the electronic element according to any of the claims 1 to 3 is **characterized by the fact**, that the density of the electric current in the conductive layer (1) is between $5.10^3$ to $40.10^4$ A.m$^{-2}$, preferably between $1.10^4$ to $25.10^4$ A.m$^{-2}$.

5. The method of stopping the crack in the conductive layer of the microstructure and/or the nanostructure of the electric and/or the electronic element according to any of the claims 1 to 4 is **characterized by the fact**, that the density of the electric current in the conductive layer (1) by the crack's (2) root (21) is between $1.10^{11}$ A.m$^{-2}$ to $1.10^{13}$ A.m$^{-2}$, preferably more than $1.10^{12}$ A.m$^{-2}$.

6. The method of stopping the crack in the conductive layer of the microstructure and/or the nanostructure of the electric and/or the electronic element according to claim 5 is **characterized by the fact**, that an electric voltage in the conductive layer (1) is 4 to 220 V, preferably 6 to 180 V.

7. The method of stopping the crack in the conductive layer of the microstructure and/or the nanostructure of the electric and/or the electronic element according to any of the claims 1 to 6 is **characterized by the fact**, that it takes place in a regularly set interval during an operation of the element (4) or pursuant to several operational cycles of the element (4).

8. The method of stopping the crack in the conductive layer of the microstructure and/or the nanostructure of the electric and/or the electronic element according to any of the claims 1 to 6 is **characterized by the fact**, that it takes place in a diagnostic phase in which a presence of the crack (2) in the conductive layer (1) of the element (4) is determined.

9. The method of stopping the crack in the conductive layer of the microstructure and/or the nanostructure of the electric and/or the electronic element according to any of the claims 1 to 8 is **characterized by the fact,** that the electric current is generated by a source (3) which is a permanent part of a device or a system with the element (4).

10. The method of stopping the crack in the conductive layer of the microstructure and/or the nanostructure of the electric and/or the electronic element according to any of the claims 1 to 8 i s **characterized by the fact**, that the electric current is generated by the source (3) which is temporarily connected to the element (4).

11. A device for stopping a crack in a conductive layer of a microstructure and/or a nanostructure of an electric and/or an electronic element which includes an electric power source (3) to produce Joule heat in the conductive layer (1) of the electric and/or the electronic element (4), is **characterized by the fact**, that the electric power source (3) is designed for a connection or is connected to the conductive layer (1) for heating of the conductive layer (1) in a vicinity of the crack (2), whereby the heating is accompanied by creation of pressure stresses leading to closing of the crack (2)

12. The device for stopping the crack in the conductive layer of the microstructure and/or the nanostructure of the electric and/or the electronic element according to claim 11 is **characterized by the fact,** that the electric power source (3) is part of a device or a system with the element (4) or it is part of an independent maintenance machine which is designed for a connection with the element (4).

Fig. 1

Fig. 2

Fig. 3

Fig. 4

Fig. 5

Fig. 6

Fig. 7

Fig. 8

Fig. 9

Fig. 10

Fig. 11

**(a)**

2

21

Fig. 12

**(b)**

2

21

1

21

2

21

4

3

Fig. 13

Fig. 14

Fig. 15

# EP 4 450 214 A1

Europäisches Patentamt
European Patent Office
Office européen des brevets

## EUROPEAN SEARCH REPORT

Application Number

EP 24 17 1389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 211 767 B1 (DARIAVACH NADER G [US] ET AL) 1 May 2007 (2007-05-01)<br>* column 1, lines 5-15 *<br>* column 1, line 65 - column 2, line 21 *<br>* column 2, line 50 - column 4, line 36 *<br>* figures 1-6 * | 1-12 | INV.<br>B23P6/04<br>H05B3/00 |
| X | CN 114 603 158 A (UNIV HARBIN ENG) 10 June 2022 (2022-06-10)<br>* abstract *<br>* figure 1 * | 1-12 | |
| X | CN 111 763 816 A (UNIV SHANGHAI MARITIME) 13 October 2020 (2020-10-13)<br>* abstract * | 1-12 | |
| X | CN 105 429 203 A (UNIV SHENYANG JIANZHU) 23 March 2016 (2016-03-23)<br>* abstract *<br>* figures 1,2 * | 1-12 | |
| X | THOMAS JIN-CHEE LIU: "Numerical Analysis of Joule Heating Behavior and Residual Compressive Stress around Crack Tip under High Electric Load", MODELLING AND SIMULATION IN ENGINEERING, vol. 2017, 19 October 2017 (2017-10-19), pages 1-8, XP093166375, ISSN: 1687-5591, DOI: 10.1155/2017/3012949 Retrieved from the Internet: URL:http://downloads.hindawi.com/journals/mse/2017/3012949.xml><br>* Chapter I. Introduction * | 1-10 | TECHNICAL FIELDS SEARCHED (IPC)<br><br>B23P<br>H05B<br>H01L<br>C21D<br>C22F |

The present search report has been drawn up for all claims

| Place of search | Date of completion of the search | Examiner |
|---|---|---|
| The Hague | 20 July 2024 | Stocker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 24 17 1389

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2024

| Patent document cited in search report | | Publication date | Patent family member(s) | Publication date |
|---|---|---|---|---|
| US 7211767 | B1 | 01-05-2007 | NONE | |
| CN 114603158 | A | 10-06-2022 | NONE | |
| CN 111763816 | A | 13-10-2020 | NONE | |
| CN 105429203 | A | 23-03-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105429203
- CN 110125611

- CN 105429203 A
- CN 111763816 A

**Non-patent literature cited in the description**

- **THOMAS JIN-CHEE LIU ; HINDAWI.** Analysis of Joule Heating Behavior and Residual Compressive Stress around Crack Tip under High Electric Load. *Modelling and Simulation in Engineering,* vol. 2017